# EUROPEAN PATENT SPECIFICATION

(11) **EP 2 926 978 B1**
(45) Date of publication and mention of the grant of the patent: **11.12.2019**
(21) Application number: 14163547.4
(22) Date of filing: 04.04.2014
(51) Int. Cl.: B29C 65/34, B29C 65/36, F16L 47/03, F16L 39/00, F16L 11/20, F28F 1/00, F28F 21/06, F28D 7/10, B29L 23/00

(54) **Intermediate welding device**
Zwischenschweißvorrichtung
Dispositif de soudage intermédiaire

(43) Date of publication of application: 07.10.2015
(73) Proprietor: Triopipe Geotherm AB, 736 32 Kungsör (SE)
(72) Inventor: Andersson, Thomas, SE-736 32 KUNGSÖR (SE)
(74) Representative: Kransell & Wennborg KB

(56) References cited:
- EP-A2- 0 510 803
- WO-A1-01/20219
- WO-A1-99/46532
- GB-A- 2 318 543
- US-A- 5 494 318

## Description

### TECHNICAL FIELD

The invention relates to an intermediate welding device for welding together two ends of a coaxial plastic pipe structure comprising at least two coaxial pipes, in one step, and to a method of welding two ends of by using the intermediate welding device.

### BACKGROUND

The welding of pipe structures, which comprise at least two coaxial pipes, thus two pipes arranged within each other, poses certain difficulties, such as increased cross section of the plastic pipe structure around the welding region and complicated welding operations involving many manual steps.

Pipe structures or pipes comprising at least two coaxial pipes are, among others, used in gasoline and fuel pipe systems and in the geothermal energy field, specifically for coaxial borehole exchangers.

The document WO99/46532 illustrates a prior art technique of welding pipe structure comprising two coaxial pipes together (Figs.i and 2 of WO99/46532) and a fusion welding socket for welding together two ends of a plastic pipe, the welding socket being configured to receive the pipe parts to be coupled together with a tight fit (Fig. 3 of WO99/40532). The inside of the fusion welding socket comprises an intermediate part, which is shorter than an outer part of the fusion welding socket and which comprises passageways for bridging the leaking detection space. The intermediate part comprises a smaller inner diameter than the outer part of the welding socket. The outer part and the intermediate part each comprise a coil on the inner side, whereby the outer part comprises a coil in each of the two end regions. The intermediate part receives the ends of the inner pipe up to a stop flange. The outer part receives the ends of the outer pipes, which are shortened, leaving a gap between the intermediate part and the ends of the outer pipes. After fitting the inner - and the outer pipes a voltage can be applied to the coils, which generates heat in the coils and the material surrounding the coils, by heat conduction, and thus welds the welding socket to the inner pipe and the pipe, thereby connecting the pipe ends.

Prior to inserting the ends of the outer pipes into the fusion welding socket, both ends of the outer pipes need to be shortened, either by pushing the outer pipe ends in a longitudinal direction of the outer pipe away from the inner pipe ends or by cutting away a part of the outer pipe ends.

EP 0 510 803 A2 discloses a coupler consisting of a length of cross-linked polyethylene pipe having a spiral groove cut in its outer surface and another spiral groove cut in its inner surface. A heating element is wound in the groove. The coupler is expanded mechanically so as to have an easy fit over the ends of polyethylene pipes. The heater element is energized and the coupler shrinks and forms fusion welded joints between itself and the pipes.

US 5 494 318 A discloses a secondary containment piping system is composed of a plurality of modules of concentric pipe. The inner pipe carries fluid being transported, and the outer pipe provides secondary containment of fluid leaking from the inner pipe. The module consists of a length of inner pipe centred in a length of outer pipe by a series of spiders or ribs, fastened to one or both of the pipes. The ends of both inner and outer pipes are coplanar and perpendicular to the axis of the module. Successive modules are joined by simultaneously welding the inner and outer pipes of one module to the corresponding pipes of an adjacent module, the preferred material for the pipes is HDPE and the welding is accomplished using electric fusion welding techniques.

WO 01/20219 A1 An electrofusion coupling for joining together two or more sections of pipe. The coupling comprises a substantially cylindrical coupling body having an outer surface and an inner surface, the inner surface being sized and shaped to form a clearance fit with the outer surface of the pipe regions to be joined, at least one electrical heating element set on or in the inner surface of the coupling body, terminal means adapted to connect the electrical heating means to an electrical supply. The terminal means does not project beyond the outer cylindrical surface of the coupling body once the welding process is complete.

GB 2 318 543 discloses a coupling device for connecting end-to-end two adjacent runs of a double pipe in a secondary containment system comprises a thermoplastic moulding providing at either end an inner, and an outer cylindrical sleeve for engagement respectively with the end part of the respective inner pipe and with the end part of the respective outer pipe. The sleeves may be provided with electrical resistance heater windings whereby, after assembly of the pipe joint, the respective windings can be energised to face together the plastics of each said sleeve and the adjacent thermoplastics pipe, thereby effecting a strong and leak-tight connection.

### SUMMARY

It is an object of the present invention to provide an intermediate welding device that facilitates the welding process and enhances reliability of the welding.

The above object is solved by an intermediate welding device according to claim 1. The above object is also solved in an alternative manner by an intermediate welding device according to claim 9.

Disclosed herein is an intermediate welding device for use when welding together two ends of a coaxial plastic pipe structure in one step. The plastic pipe structure has at least an innermost pipe and an intermediate pipe. The intermediate welding device comprises a hollow section. The hollow section has an inner side configured to receive the innermost pipe with a tight fit and an outer side. The intermediate welding device further comprises a circumferentially closed inner heating element arranged in order to heat the inner side by thermal conduction, wherein the intermediate welding device further comprises a circumferentially closed outer heating element arranged in order to heat the outer side by thermal conduction, which outer side is configured to glide into the intermediate pipe with a tight fit.

In the following circumferentially closed means that the inner heating element and the outer heating element each form a closed loop on the inner side and the outer side.

In order that the circumferentially closed outer heating element and the circumferentially closed inner heating element may heat the outer side and inner side, respectively, the circumferentially closed outer heating element and the circumferentially closed inner heating element may be arranged on or at least in close proximity of the outer side and inner side, respectively.

The intermediate welding device allows welding the coaxial plastic pipe structure in one step without cutting or preparing the intermediate pipe ends prior to the welding.

The term coaxial means, that the coaxial plastic pipe structure comprises at least two pipes arranged within each other, thus coaxially arranged in respect to each other.

The coaxial pipe structure may be a coaxial borehole heat exchanger.

The circumferentially closed inner- and outer heating elements may each comprise two circumferentially closed heating portions arranged on either side of a middle portion of the hollow section.

The hollow section has a continuous and constant cross section over its entire length, as measured along the longitudinal direction.

Additionally the circumferentially closed inner- and outer heating elements may be arranged on the inner- and outer surface, respectively, of the hollow section or embedded on the inner- and outer side, respectively, of the hollow section.

In an embodiment, the hollow section is a sleeve.

The hollow section may have any cross sectional shape, such as rectangular, circular, elliptic, etc., depending on the cross section of the innermost pipes and intermediate pipes of the coaxial plastic pipe structure.

In a further embodiment the hollow section comprises a front end portion and a back end portion, said front- and back end portion being conically shaped with an increasing cross section towards the middle portion of the hollow section.

This facilitates the insertion of the intermediate welding device in the space in between the innermost pipe and the intermediate pipe.

The hollow section may comprise at least one longitudinal passage.

Such a longitudinal passage may ensure that the space in between the innermost pipe and the intermediate pipe one side of the intermediate welding device is in fluid communication with the space in between the innermost pipe and the intermediate pipe on the other side of the intermediate welding device, when the intermediate welding device is in place and welded to the coaxial plastic pipe structure.

In an embodiment the hollow section is made of a weldable plastic.

This may ensure that the plastic of the hollow section, which plastic is heated by heat conduction via the circumferentially closed inner- and outer heating elements, bonds with the plastic of the coaxial plastic pipe structure. The plastic of the coaxial plastic pipe structure is also heated via heat conduction from the circumferentially closed inner- and outer heating elements.

By applying a voltage to the terminals of the outer and inner coils, the outer and inner coils are heating up and the intermediate welding device is welded to the coaxial plastic pipe structure.

In a preferred embodiment the outer and inner coils are made of a single resistance wire or filament.

Using a single resistance wire or filament has the advantage that only two plus and minus terminals need to be connected to a voltage source in order to energize the circumferentially closed inner- and outer heating elements. The resistance wire or filament may be arranged on the inner side or on the outer side of the hollow section. In order to facilitate the insertion of the intermediate welding device into the space in between the innermost pipe and the intermediate pipe, the outer and inner coils may be embedded or slightly embedded in the inner- and outer side, respectively.

The outer and inner coils may comprise two terminals, said terminals being arranged in a middle portion of the hollow section on the outer side, configured to extend beyond the intermediate pipe.

This eases the connection of a voltage source to the terminals. The terminals may extend away from the middle portion of the hollow section.

According to the invention of claim 1 the outer coil is arranged offset from the inner coil as seen in a direction perpendicular to the longitudinal direction of the intermediate welding device.

This may prevent the melting of the entire cross section of the hollow section when the outer and inner coils are energized.

According to the invention of claim 9 the circumferentially closed outer heating element and the circumferentially closed inner heating element are embodied in the form of outer and inner induction weldable layers.

Using outer and inner induction weldable layers has the advantage that no terminals need to be connected to a voltage source, thus eliminating one work step. The outer and inner induction weldable layers are energized/heated by applying an electromagnetic field.

The outer induction weldable layer is arranged offset from the inner induction weldable layer as seen in a direction perpendicular to the longitudinal direction L of the intermediate welding device.

This may prevent the melting of the entire cross section of the hollow section, at least in a region of the induction weldable layers, when said layers are energized.

The outer and inner induction weldable layers may comprise a plurality of susceptors.

In another embodiment the outer and inner induction weldable layers may additionally comprises a matrix material.

The susceptors are preferably embedded in the matrix material, thereby forming a paste, whereby this past may be injection moulded. The outer and inner induction weldable layers may be injection moulded at the same time as the hollow section or prior or post to injection moulding the hollow section.

Disclosed herein is further a method for axially welding together two coaxial borehole heat exchanger parts via the intermediate welding device. The coaxial borehole heat exchanger parts each comprising an innermost pipe and an intermediate pipe, the method comprising the steps of:
- removing axial ribs of the intermediate pipes in an end region of each of the coaxial borehole heat exchanger parts;
- inserting the intermediate welding device into a space in between the intermediate pipes and the innermost pipes; and
- energizing the circumferentially closed outer- and the circumferentially closed inner heating element via a power source.

The step of removing the axial ribs may not be necessary in case the intermediate pipe does not comprise axial ribs.

This method enables the operator to weld two coaxial plastic pipes, such as the innermost pipes and the intermediate pipes of two coaxial borehole exchanger parts, in one step without prior preparation of the ends of any of the two pipes.
- connecting the two terminals to a power source, prior to energizing the circumferentially closed outer - and the circumferentially closed inner heating element via the power source.

This step may only be necessary if the circumferentially closed inner- and outer heating elements are embodied in the form of outer and inner coils. In case the circumferentially closed inner- and outer heating elements are embodied in the form of outer and inner induction weldable layers, the above step is not necessary.

The power source may provide a voltage or an electromagnetic field.

In a further embodiment, the method may additionally comprise the steps of
- installing an outer welding device on outermost pipes of the coaxial borehole heat exchanger parts; and
- energizing a circumferentially closed inner heating element of the outer welding device via the power source.

Since the coaxial borehole heat exchanger part usually comprises a third pipe, such as an outermost pipe, which may also need to be welded together with the outermost pipe of a further coaxial borehole heat exchanger part, the method may include the above steps.

The outer welding device may be a conventional welding sleeve comprising a circumferentially closed inner welding layer on the inside surface of the sleeve.

Generally, all terms used in the claims are to be interpreted according to their ordinary meaning in the technical field, unless explicitly defined otherwise herein. All references to "a/an/the element, apparatus, component, means, step, portion, etc." are to be interpreted openly as referring to at least one instance of the element, apparatus, component, means, step, portion etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Fig 1 schematically illustrates a perspective view of an intermediate welding device according to the invention with a hollow section shown transparent;
Fig. 2 schematically illustrates a front view of the intermediate welding device of figure 1;
Fig. 3 schematically illustrates a side view of the intermediate welding device of figure 1;
Fig. 4 schematically illustrates a view on a cross section of the intermediate welding device cut along line IV-IV of figure 3;
Fig. 5 schematically illustrates a perspective view of an another embodiment of the intermediate welding device according to the invention with the hollow section shown transparent;
Fig. 6 schematically illustrates a front view of the intermediate welding device according to figure 5;
Fig. 7 schematically illustrates a side view on a coaxial borehole heat exchanger;
Fig. 8a schematically illustrates a view on a cross section of the coaxial borehole heat exchanger cut along line VIII-VIII of figure 7;
Fig. 8b schematically illustrating a welding zone with a part of the intermediate welding device according to an embodiment of the invention;
Fig. 9 schematically illustrates a view on a cross section of the coaxial borehole heat exchanger cut along ling IX-IX of figure 8a;
Fig. 10 schematically illustrates perspective view of a piece of the coaxial borehole heat exchanger cut at line IX-IX of figure 8a;
Fig. 11 schematically illustrates a perspective view of a piece of the coaxial borehole heat exchanger cut at line IX-IX of figure 8a; and
Fig. 12 illustrates a method of welding two coaxial borehole heat exchanger parts together.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

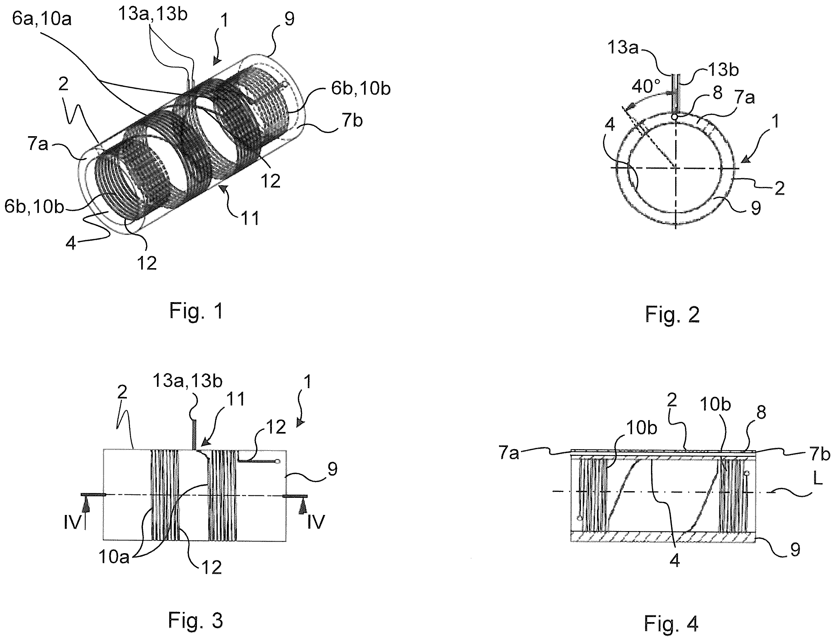

Figure 1 prospectively illustrates an intermediate welding device 1 according to the invention comprising a hollow section 9 and a circumferentially closed outer heating element 6a and a circumferentially closed inner heating element 6b. For illustrative purposes the hollow section 9, which is preferably made of a weldable plastic is shown transparent in figure 1.

In the following circumferentially closed means that the inner heating element 6b and the outer heating element 6a each form a closed loop on the inner side 4 and the outer side 2.

The hollow section comprises an outer side 2 and an inner side 4. The outer side 2 and the inner side 4 may alternatively be called outer surface and inner surface. The intermediate welding device 1 and the hollow section 9, respectively further comprise a front end portion 7a and a back end portion 7b.

Still referring to figure 1, the circumferentially closed outer heating element 6a and the circumferentially closed inner heating element 6b are embodied in the form of outer and inner coils 10a, 10b. Each outer coil 10a comprises two circumferentially closed coil portions and each inner coil 10b comprises two circumferentially closed coil portions. The outer coil 10a and the inner coil 10b and the circumferentially closed coil portions are made of a resistance wire or filament 12 and electrically interconnected with each other via the resistance wire or filament 12. The resistance wire or filament 12 is a continuous wire and has a beginning and an end, which beginning and end from the terminals 13a, 13b. The terminals 13a, 13b are extending away from the hollow section 9 in a middle portion 11 of it and are configured to be connected to power source/voltage source (not shown).

Figure 1 illustrates how the resistance wire or filament 12 runs from the beginning and the terminal 13a, respectively around the outer side 2 to form a first circumferentially closed outer portion of the outer coil 10a, is then guided on the hollow section into back end portion 7b and there through the hollow section 9 to the inner side 4, where it forms a first circumferentially closed inner portion of the inner coil 10b. From the first circumferentially closed inner portion of the inner coil 10b the resistance wire or filament is then guided on the inner side 4 to the front end portion 7a where it forms the second circumferentially closed inner portion of the inner coil 10b. From the second circumferentially closed inner portion of the inner coil 10b, the resistance wire or filament 12 is guided through the hollow section 9 where it forms the second circumferentially closed inner portion of the outer coil 10a on the outer side 2.

The first and second circumferentially closed inner portions of the outer coil 10a and the first and second circumferentially closed inner portions of the inner coil 10b and the outer and inner coil 10a, 10b, respectively, are arranged offset from each other as seen in a direction perpendicular to the longitudinal direction L (c.f. figure 4) of the intermediate welding device 1.

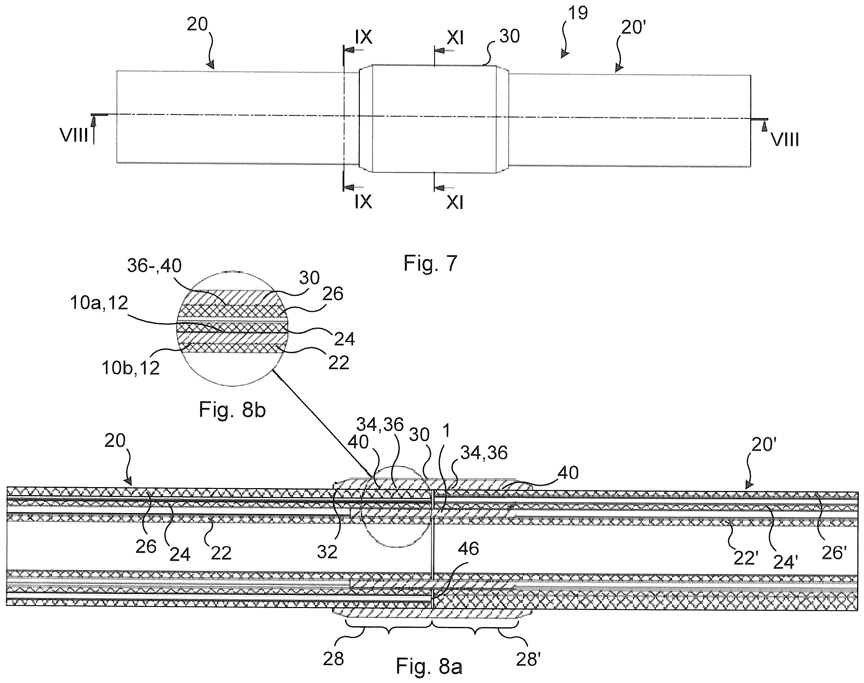

Figure 2 illustrates a front view of the intermediate welding device 1. The terminals 13a, 13b are well visible and, since the hollow body is shown transparent, the passages of the resistance wire of filament 12 (not shown in figure 2) are visible, which passages are arranged in the hollow section 9 at an angle of at least approximately 40° from the terminals 13a, 13b, as shown in figure 2. Figure 2 further illustrates an axial passage 8 which is embedded within the hollow section 9 and which axial passage 8 extends from one side of the intermediate welding device 1 to the other side of the intermediate welding device 1. The purpose of this axial passage 8 may be obtained from the description of figure 8a.

From figures 1 and 2 it can be seen, that the front- and back end portion 7a, 7b can be conically shaped (not shown). Thereby the surface of the cross section of the hollow section at one of the two ends is smaller than the cross section of the hollow section closer to the middle section 11. In addition the inner side 4 and the outer side 2 may be conically shaped towards the two ends of the hollow section and in the front and back end portions 7a, 7b.

Figure 3 illustrates a side view of the intermediate welding device 1, illustrating the outer coil 10a with the first and second circumferentially closed coil portions, arranged on the outer side 2.

Referring now to figure 4, which illustrates a view on a cross section cut along line IV-IV of figure 3, the inner coil 10b with the first and second circumferentially closed coil portions, arranged on the inner side 4, is shown. The axial passage 8 running in the longitudinal direction L of the intermediate welding device 1 is also illustrated in figure 4. As can be seen from figure 4, the outer coil 10a may be embedded in the hollow section 8, this may be done by placing the outer and inner coils 10a, 10b in a form or mould prior to injection moulding of the hollow section 9. This may facilitate the insertion procedure of the intermediate welding device in between two coaxial pipes.

There may be more than one axial passage 8 embedded in the hollow section 9, depending on the requirements. The axial passages 8 may be pipes or little tubes, for example made of steel or plastic, that are embodied in the intermediate welding device 1 during the production and thus during the injection moulding process.

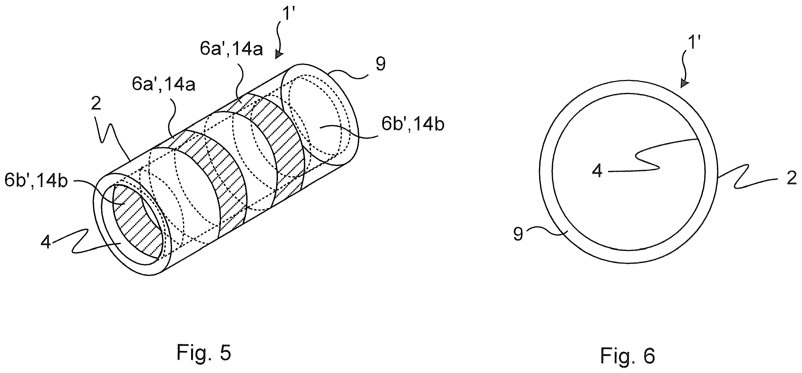

Figure 5 illustrates an alternative embodiment of the intermediate welding device 1'comprising the hollow section 9 with the inner side 4 and the outer side 2 and the circumferentially closed outer heating element 6a' and the circumferentially closed inner heating element 6b'. The circumferentially closed outer- and circumferentially closed inner heating element 6a', 6b' are embodied in the form of an outer induction weldable layer 14a and an inner induction weldable layer 14b. The outer induction weldable layer 14a is arranged offset from the inner induction weldable layer 14b. Each induction weldable layer 14a, 14b may comprise a first and a second circumferentially closed induction weldable portion. The first and second circumferentially closed induction weldable portions of the outer induction weldable layer 14a and the inner induction weldable layer 14b are arranged offset from each other, as seen in a direction perpendicular to the longitudinal direction L (c.f figure 4) of the intermediate welding device 1'.

The outer and inner induction weldable layers 14a, 14b may comprise a plurality of susceptors and optionally a matrix material. The matrix material may work as a binder that embeds the susceptors. The susceptors are typically made of a metallised film, ceramic or metal such as aluminium flakes. The susceptors have the ability to absorb electromagnetic energy from a power source and turn it into heat.

The matrix material may not be needed, since the susceptors may be arranged in a negative form, which is used to injection mould the hollow section 9, prior to the injection moulding of the hollow section 9, so that the susceptors are directly embedded in the plastic of the hollow section 9 during injection moulding.

By using outer and inner induction weldable layers 14a, 14b, the terminals 13a, 13b are not required since an electromagnetic power source is used to energize the outer and inner induction weldable layers 14a, 14b.

Figure 6 illustrates a front view of the intermediate welding device (1') according to figure 5, without terminals 13a, 13b. The operator or welder does not need to connect terminals 13a, 13b to a power source, when the circumferentially closed outer heating element 6a' and the circumferentially closed inner heating element 6b' are embodied in the form of outer and inner induction weldable layers 14a, 14b.

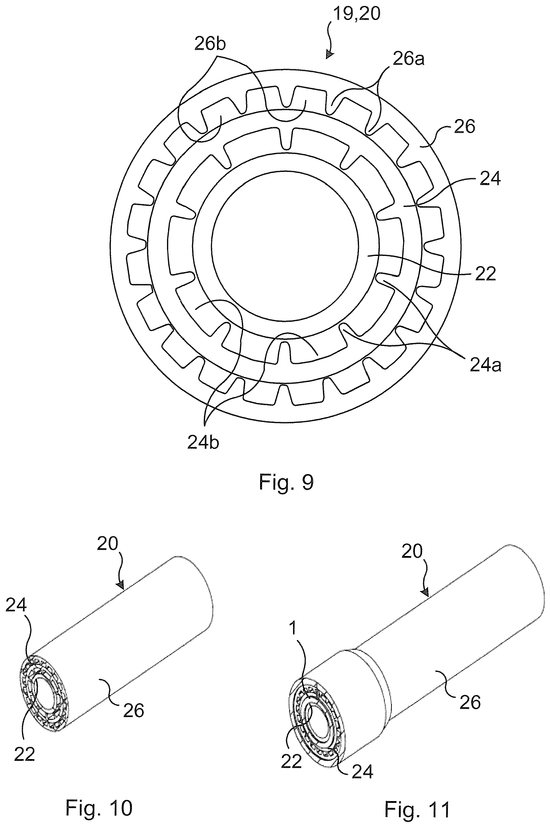

Figure 7 illustrates a coaxial borehole heat exchanger 19 comprising two coaxial borehole heat exchanger parts 20, 20' that are welded together by an outer welding device 30 and an intermediate welding device 1,1'. The borehole heat exchanger 19 and the borehole heat exchanger parts 20, 20' comprise an innermost pipe 22, 22', an intermediate pipe 24, 24' and an outermost pipe 26, 26', as best illustrated in figures 8a and 9.

Figure 8a illustrates a cross sectional view onto the cross section cut along the line VIII-VIII of figure 7. The welding zone of figure 8a and 8b is illustrated with an intermediate welding device 1 according to figures 1 to 4, comprising outer and inner coil 10a, 10b. The welding zone and the welding may however be also achieved and embodied with the welding device 1' according to figures 5 and 6.

The coaxial borehole heat exchanger parts 20', 20 may each comprise an end region 28, 28', which end region needs to be interconnected with each other by welding and by using the intermediate welding device 1, 1' according to an embodiment of the invention.

The intermediate welding device 1 is inserted into an annular space in between the innermost pipe 22, 22' and the intermediate pipe 24, 24' of the coaxial borehole heat exchanger parts 20, 20'. The two coaxial borehole heat exchanger parts 20, 20' are then pushed towards one another so that the intermediate welding device 1 is gliding into the respective first and second end region 28, 28'. In order to ensure that the intermediate welding device 1 is centrally positioned in between the two coaxial borehole exchanger parts 20, 20', it may comprise a protrusion (indicated in figure 8a) or the like on the inner side 4. The protrusion or the like may result in the gap 46, as illustrated in figure 8a.

The axial passage 8, illustrated in figure 4, may be used to interconnect the annular space in between the innermost pipe 22 and the intermediate pipe 24 of one coaxial borehole heat exchanger part 20 with the annular space in between the innermost pipe 22' and the intermediate pipe 24' of the other coaxial borehole heat exchanger part 20'.

Still referring to figure 8a, once the intermediate welding device 1 is in place, the terminals 13a, 13b (not shown in figure 8a) may be connected to the power source to apply a voltage. At this stage the outer welding device 30 is still not in place, so that the operator has easy access to the terminals 13a, 13b. By applying a voltage, the outer- and inner coils 10a, 10b heat up and weld the intermediate welding device 1 to the innermost pipes 22, 22' and the intermediate pipe 24, 24'. The welding zone may be supervised by temperature measurement and visual control.

After welding of the intermediate welding device 1, the outer welding device 30 is shoved over the outermost pipes 26, 26' and over the first and second end regions 28, 28'. The outer welding device 30 comprises an inner side 32, a circumferentially closed inner heating element 34 arranged on the or at least close to the inner side 32, said inner heating element 34 being embodied in the form of a coil 36 made of a resistance wire or filament 36. The coil 36 may comprise two circumferentially closed coil portions, one on each side of the gap 46, when the outer welding device 30 is placed.

By applying a voltage source to the coil 36 via terminals (not shown in figure 8a) the outer welding device 30 is welded to the outermost pipes 26, 26' of the two coaxial borehole heat exchanger parts 20, 20'.

As best illustrated in figures 7 and 8a, the outer welding device 30 may comprise conically shaped end portions, which end portions are conical towards the outermost pipes 26, 26'.

The circumferentially closed inner heating element 34 of the outer welding device 30 may alternatively be embodied in the form of an induction weldable layer (not shown), of the above described type.

In a further embodiment, which is not illustrated in the figures, the outer and inner coils 10a, 10b of the intermediate welding device 1 may be electrically interconnected with the coil 36 of the outer welding device 30 so that the innermost pipes 22, 22', the intermediate pipes 24, 24' and the outermost pipes 26, 26' can be welded in one single step.

In case the outer welding device and the intermediate welding device 1' comprise induction weldable layers both solutions are possible, namely firstly welding the intermediate welding device 1' to the innermost pipes 22, 22' and the intermediate pipes 24, 24' and secondly welding the outer welding device to the outer pipes 26, 26' or welding the intermediate welding device 1' and the outer welding device simultaneously.

A simultaneous welding may however not always be wanted for quality reasons.

Figure 8b illustrates an enhanced view of the welding zone illustrating the outer welding device 30, the intermediate welding device 1 and the innermost pipe 22, the intermediate pipe 24 and the outermost pipe 26.

Figure 9 illustrates a view on a cross section of the coaxial borehole heat exchanger 19 and the coaxial borehole heat exchanger part 20, respectively, cut along line IX-IX of figure 7.

The innermost pipe 22, the intermediate pipe 24 and the outermost pipe 26 are arranged coaxially with respect to one another. The intermediate pipe 24 comprises a plurality of axial ribs 24a and a plurality of axial grooves 24b. The axial ribs 24a and axial grooves 24b may be formed for insulation purposes.

Similar to the intermediate pipe 24, the outermost pipe 26 may comprise a plurality of axial ribs 26a and a plurality of axial grooves 26b.

In order to fit the intermediate welding device 1, 1' into the annular space, the axial ribs 24a of the intermediate pipes 24, 24' may be removed at least in a first and second end region 28, 28' of the coaxial heat exchanger parts 20, 20'. The removal may be done for example mechanically by grinding.

Figures 10 illustrates a perspective view of a piece of the coaxial borehole heat exchanger part 20 away from the welding zone, cut along line IX-IX of figure 8a, and thus without the intermediate welding device 1.

Figure 11 illustrates a perspective view of a piece of the coaxial borehole heat exchanger part 20 in the welding zone, cut along line XI-XI of figure 8a, and thus with the intermediate welding device 1 visible in embedded in the annular space in between the innermost pipe 22 and the intermediate pipe 24.

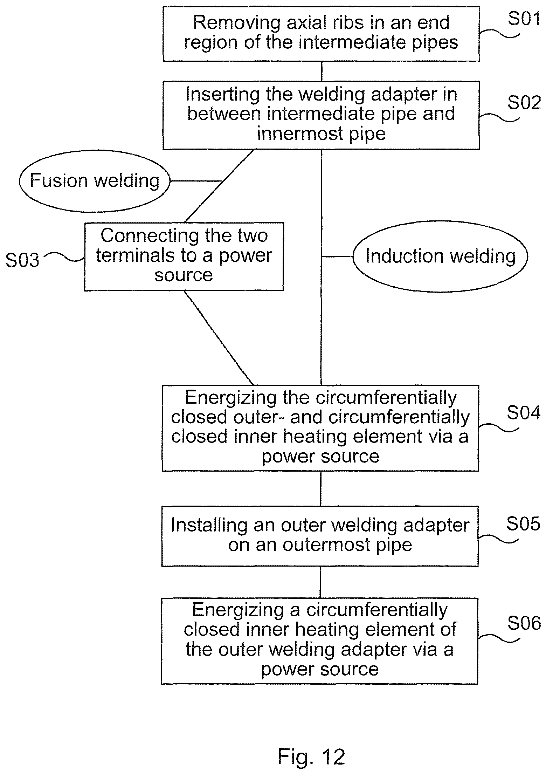

Figure 12 illustrates method steps of a method for welding two coaxial borehole heat exchanger parts 20, 20' together. The method comprises the steps of:
- Removing S01 axial ribs 24a of the intermediate pipes 24, 24' in an end region 28, 28' of each of the coaxial borehole heat exchanger parts 20, 20';
- Inserting SO₂ the intermediate welding device 1 into the annular space in between the intermediate pipes 24, 24' and the innermost pipes 22, 22';
- Connecting SO₃ the two terminals 13a, 13b to a power source, prior to energizing SO₄ the circumferentially closed outer - and the circumferentially closed inner heating element via the power source; and
- Energizing SO₄ the circumferentially closed outer- and the circumferentially closed inner heating element 6a, 6b via a power source.

The terminals 13a, 13b only need to be connected in case the circumferentially outer- and circumferentially inner heating elements 6a, 6b are embodied in the form of outer and inner coils 10a, 10b, thus when using fusion welding. In case the circumferentially outer- and circumferentially inner heating elements 6a', 6b' are embodied in the form of induction weldable layers 14a, 14b, this step is not necessary, which is indicated in figure 12.

Finally when the above steps are performed, the method may additionally comprise a checking and controlling step (not illustrated in figure 12) and then the further steps of:
- Installing SO₅ an outer welding device 30 on outermost pipes 26, 26' of the coaxial borehole heat exchanger parts 20, 20'; and
- Energizing S06 a circumferentially closed inner heating element 34 of the outer welding device 30 via the power source.

The welding of the outermost welding device 30 may additionally also comprise a controlling and checking step after the welding.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. An intermediate welding device for use when welding together two ends of a coaxial plastic pipe structure having an innermost pipe (22, 22') and an intermediate pipe (24, 24'), in one step, said intermediate welding device (1) comprising:
- a hollow section (9) having an inner side (4) configured to receive the innermost pipe (22, 22') with a tight fit and an outer side (2);
- a circumferentially closed inner heating element (6b) arranged in order to heat the inner side (4) by thermal conduction;
wherein the intermediate welding device further comprises a circumferentially closed outer heating element (6a) arranged in order to heat the outer side (2) by thermal conduction, which outer side (2) is configured to glide into the intermediate pipe (24, 24') with a tight fit,
wherein the circumferentially closed outer heating element (6a) and the circumferentially closed inner heating element (6b) are embodied in the form of outer and inner coils (10a, 10b), which are interconnect with each other,
**characterised in that** the outer coil (10a) is arranged offset from the inner coil (10b) as seen in a direction perpendicular to the longitudinal direction (L) of the intermediate welding device.

2. The intermediate welding device according to claim 1, wherein the circumferentially outer heating element (6b) is arranged on the outer side (2) and wherein the circumferentially closed inner heating element (6a) is arranged on the inner side (4).

3. The intermediate welding device according to claim 1, wherein the hollow section (9) is a sleeve.

4. The intermediate welding device according to any of claims 1 to 3,
wherein the hollow section (9) comprises a front end portion (7a) and a back end portion (7b), said front end portion (7a) and back end portion (7b) being conically shaped with an increasing cross section towards a middle portion (11) of the hollow section (9).

5. The intermediate welding device according to any of the preceding claims, wherein the hollow section (9) comprises at least one longitudinal passage (8).

6. The intermediate welding device according to any of the preceding claims, wherein the hollow section (9) is made of a weldable plastic.

7. The intermediate welding device according to any of the preceding claims, wherein the outer and inner coils (10a, 10b) are made of a single resistance wire or filament (12).

8. The intermediate welding device according to any of claims 1-6, wherein the outer and inner coils (10a, 10b) comprise two terminals (13a, 13b), said two terminals being arranged in a middle portion (11) of the hollow section (9) on the outer side (2), configured to extend beyond the intermediate pipe (24, 24').

9. An intermediate welding device for use when welding together two ends of a coaxial plastic pipe structure having an innermost pipe (22, 22') and an intermediate pipe (24, 24'), in one step, said intermediate welding device (1') comprising:
- a hollow section (9) having an inner side (4) configured to receive the innermost pipe (22, 22') with a tight fit and an outer side (2);
- a circumferentially closed inner heating element (6b') arranged in order to heat the inner side (4) by thermal conduction;
wherein the intermediate welding device further comprises a circumferentially closed outer heating element (6a') arranged in order to heat the outer side (2) by thermal conduction, which outer side (2) is configured to glide into the intermediate pipe (24, 24') with a tight fit,
**characterised in that** the circumferentially closed outer heating element (6a') and the circumferentially closed inner heating element (6b') are embodied in the form of outer and inner induction weldable layers (14a, 14b),
wherein the outer induction weldable layer (14a) is arranged offset from the inner induction weldable layer (14b) as seen in a direction perpendicular to the longitudinal direction (L) of the intermediate welding device.

10. The intermediate welding device according to claim 9, wherein the outer and inner induction weldable layers (14a, 14b) comprise a plurality of susceptors.

11. A method for axially welding together two coaxial borehole heat exchanger parts (20, 20') via the intermediate welding device (1,1') according to any of claims 1 to 10, said coaxial borehole heat exchanger parts (20, 20') each comprising an innermost pipe (22, 22') and an intermediate pipe (24, 24'), the method comprising the steps of:
- removing (S01) axial ribs (24a) of the intermediate pipes (24, 24') in an end region (28, 28') of each of the coaxial borehole heat exchanger parts (20, 20');
- inserting (SO2) the intermediate welding device (1) into a space in between the intermediate pipes (24, 24') and the innermost pipes (22, 22'); and
- energizing (S04) the circumferentially closed outer- and the circumferentially closed inner heating element (6a, 6a', 6b, 6b') via a power source.

12. The method according to claim 11 dependent of claim 8, further comprising the step of:
- connecting (S03) the two terminals (13a, 13b) to a power source, prior to energizing (S04) the circumferentially closed outer - and the circumferentially closed inner heating element via the power source.

13. The method according to claim 11 or 12, further comprising the steps of:
- installing (S05) an outer welding device (30) on outermost pipes (26, 26') of the coaxial borehole heat exchanger parts (20, 20'); and
- energizing (S06) a circumferentially closed inner heating element (34) of the outer welding device (30) via the power source.

## Patentansprüche

1. Zwischenschweißvorrichtung zur Verwendung beim Zusammenschweißen von zwei Enden einer koaxialen Kunststoffrohrstruktur, die ein innerstes Rohr (22, 22') und ein Zwischenrohr (24, 24') aufweist, in einem Schritt, wobei die Zwischenschweißvorrichtung (1) Folgendes umfasst:
- einen hohlen Abschnitt (9), der eine Innenseite (4), die eingerichtet ist, um das innerste Rohr (22, 22') mit einer festen Passung aufzunehmen, und eine Außenseite (2) aufweist;
- ein umlaufend geschlossenes inneres Heizelement (6b), das angeordnet ist, um die Innenseite (4) durch Wärmeleitung zu erwärmen;
wobei die Zwischenschweißvorrichtung ferner ein umlaufend geschlossenes äußeres Heizelement (6a) umfasst, das angeordnet ist, um die Außenseite (2) durch Wärmeleitung zu erwärmen, wobei die Außenseite (2) eingerichtet ist, um in das Zwischenrohr (24, 24') mit einer festen Passung zu gleiten,
wobei das umlaufend geschlossene äußere Heizelement (6a) und das umlaufend geschlossene innere Heizelement (6b) in Form einer äußeren und inneren Spule (10a, 10b) ausgeführt sind, die miteinander verbunden sind,
**dadurch gekennzeichnet, dass** die äußere Spule (10a), in einer Richtung senkrecht zu der Längsrichtung (L) der Zwischenschweißvorrichtung betrachtet, versetzt von der inneren Spule (10b) angeordnet ist.

2. Zwischenschweißvorrichtung nach Anspruch 1, wobei das umlaufend äußere Heizelement (6b) auf der Außenseite (2) angeordnet ist und wobei das umlaufend geschlossene innere Heizelement (6a) auf der Innenseite (4) angeordnet ist.

3. Zwischenschweißvorrichtung nach Anspruch 1, wobei der hohle Abschnitt (9) eine Hülse ist.

4. Zwischenschweißvorrichtung nach einem der Ansprüche 1 bis 3, wobei der hohle Abschnitt (9) einen vorderen Endabschnitt (7a) und einen hinteren Endabschnitt (7b) umfasst, wobei der vordere Endabschnitt (7a) und hintere Endabschnitt (7b) mit einem hin zu einem Mittenabschnitt (11) des hohlen Abschnitts (9) zunehmenden Querschnitt konisch geformt sind.

5. Zwischenschweißvorrichtung nach einem der vorhergehenden Ansprüche, wobei der hohle Abschnitt (9) mindestens einen Längsdurchgang (8) umfasst.

6. Zwischenschweißvorrichtung nach einem der vorhergehenden Ansprüche, wobei der hohle Abschnitt (9) aus einem schweißbaren Kunststoff hergestellt ist.

7. Zwischenschweißvorrichtung nach einem der vorhergehenden Ansprüche, wobei die äußere und innere Spule (10a, 10b) aus einem einzigen Widerstandsdraht oder -filament (12) hergestellt sind.

8. Zwischenschweißvorrichtung nach einem der Ansprüche 1-6, wobei die äußere und innere Spule (10a, 10b) zwei Anschlüsse (13a, 13b) umfassen, wobei die zwei Anschlüsse in einem Mittenabschnitt (11) des hohlen Abschnitts (9) auf der Außenseite (2) angeordnet sind, eingerichtet, um sich über das Zwischenrohr (24, 24') hinaus zu erstrecken.

9. Zwischenschweißvorrichtung zur Verwendung beim Zusammenschweißen von zwei Enden einer koaxialen Kunststoffrohrstruktur, die ein innerstes Rohr (22, 22') und ein Zwischenrohr (24, 24') aufweist, in einem Schritt, wobei die Zwischenschweißvorrichtung (1') Folgendes umfasst:
- einen hohlen Abschnitt (9), der eine Innenseite (4), die eingerichtet ist, um das innerste Rohr (22, 22') mit einer festen Passung aufzunehmen, und eine Außenseite (2) aufweist;
- ein umlaufend geschlossenes inneres Heizelement (6b), das angeordnet ist, um die Innenseite (4) durch Wärmeleitung zu erwärmen;
wobei die Zwischenschweißvorrichtung ferner ein umlaufend geschlossenes äußeres Heizelement (6a') umfasst, das angeordnet ist, um die Außenseite (2) durch Wärmeleitung zu erwärmen, wobei die Außenseite (2) eingerichtet ist, um in das Zwischenrohr (24, 24') mit einer festen Passung zu gleiten,
**dadurch gekennzeichnet, dass** das umlaufend geschlossene äußere Heizelement (6a') und das umlaufend geschlossene innere Heizelement (6b') in Form einer äußeren und inneren induktionsschweißbaren Schicht (14a, 14b) ausgeführt sind,
wobei die äußere induktionsschweißbare Schicht (14a), in einer Richtung senkrecht zu der Längsrichtung (L) der Zwischenschweißvorrichtung betrachtet, versetzt von der inneren induktionsschweißbaren Schicht (14b) angeordnet ist.

10. Zwischenschweißvorrichtung nach Anspruch 9, wobei die äußere und innere induktionsschweißbare Schicht (14a, 14b) mehrere Suszeptoren umfassen.

11. Verfahren zum axialen Zusammenschweißen von zwei koaxialen Bohrloch-Wärmetauscherteilen (20, 20') über die Zwischenschweißvorrichtung (1, 1') nach einem der Ansprüche 1 bis 10, wobei die koaxialen Bohrloch-Wärmetauscherteile (20, 20') jeweils ein innerstes Rohr (22, 22') und ein Zwischenrohr (24, 24') umfassen, wobei das Verfahren die folgenden Schritte umfasst:
- Entfernen (S01) von axialen Rippen (24a) der Zwischenrohre (24, 24') in einem Endbereich (28, 28') von jedem der koaxialen Bohrloch-Wärmetauscherteile (20, 20');
- Einsetzen (S02) der Zwischenschweißvorrichtung (1) in einen Raum zwischen den Zwischenrohren (24, 24') und den innersten Rohren (22, 22'); und
- Ansteuern (S04) des umlaufend geschlossenen äußeren und des umlaufend geschlossenen inneren Heizelements (6a, 6a', 6b, 6b') über eine Stromquelle.

12. Verfahren nach Anspruch 11 in Abhängigkeit von Anspruch 8, ferner umfassend den folgenden Schritt:
- Verbinden (S03) der zwei Anschlüsse (13a, 13b) mit einer Stromquelle vor einem Ansteuern (S04) des umlaufend geschlossenen äußeren und des umlaufend geschlossenen inneren Heizelements über die Stromquelle.

13. Verfahren nach Anspruch 11 oder 12, ferner umfassend die folgenden Schritte:
- Installieren (S05) einer äußeren Schweißvorrichtung (30) auf äußersten Rohren (26, 26') der koaxialen Bohrloch-Wärmetauscherteile (20, 20'); und
- Ansteuern (S06) eines umlaufend geschlossenen inneren Heizelements (34) der äußeren Schweißvorrichtung (30) über die Stromquelle.

## Revendications

1. Dispositif de soudage intermédiaire destiné à une utilisation pour souder ensemble deux extrémités d'une structure à tuyau en plastique coaxiale comportant un tuyau situé le plus à l'intérieur (22, 22') et un tuyau intermédiaire (24, 24') en une étape, ledit dispositif de soudage intermédiaire (1) comprenant :
- une section creuse (9) comportant une face intérieure (4) conçue pour recevoir le tuyau situé le plus à l'intérieur (22, 22') avec un ajustement serré et une face extérieure (2) ;
- un élément chauffant intérieur fermé circonférentiellement (6b) disposé de manière à chauffer la face intérieure (4) par conduction thermique,
le dispositif de soudage intermédiaire comprenant en outre un élément chauffant extérieur fermé circonférentiellement (6a) disposé de manière à chauffer la face extérieure (2) par conduction thermique, laquelle face extérieure (2) est conçue pour glisser dans le tuyau intermédiaire (24, 24') avec un ajustement serré,
l'élément chauffant extérieur fermé circonférentiellement (6a) et l'élément chauffant intérieur fermé circonférentiellement (6b) étant matérialisés sous la forme de bobines extérieure et intérieure (10a, 10b) qui s'interconnectent entre elles,
**caractérisé en ce que** la bobine extérieure (10a) est disposée décalée de la bobine intérieure (10b) vue dans un sens perpendiculaire au sens longitudinal (L) du dispositif de soudage intermédiaire.

2. Dispositif de soudage intermédiaire selon la revendication 1, dans lequel l'élément chauffant extérieur fermé circonférentiellement (6b) est disposée sur la face extérieure (2) et l'élément chauffant intérieur fermé circonférentiellement (6a) est disposé sur la face intérieure (4)

3. Dispositif de soudage intermédiaire selon la revendication 1, dans lequel la section creuse (9) est un manchon.

4. Dispositif de soudage intermédiaire selon l'une quelconque des revendications 1 à 3, dans lequel la section creuse (9) comprend une section terminale avant (7a) et une section terminale arrière (7b), lesdites section terminale avant (7a) et section terminale arrière (7b) ayant une forme conique avec une section transversale croissante vers une section médiane (11) de la section creuse (9).

5. Dispositif de soudage intermédiaire selon l'une quelconque des revendications précédentes, dans lequel la section creuse (9) comprend au moins un passage longitudinal (8).

6. Dispositif de soudage intermédiaire selon l'une quelconque des revendications précédentes, dans lequel la section creuse (9) est composée d'une matière plastique soudable.

7. Dispositif de soudage intermédiaire selon l'une quelconque des revendications précédentes, dans lequel les bobines extérieure et intérieure (10a, 10b) sont composées d'un simple fil ou filament à résistance (12).

8. Dispositif de soudage intermédiaire selon l'une quelconque des revendications 1 à 6, dans lequel les bobines extérieure et intérieure (10a, 10b) comprennent deux bornes (13a, 13b), lesdites deux bornes étant disposées dans une section médiane (11) de la section creuse (9) sur la face extérieure (2) conçue pour s'étendre au-delà du tuyau intermédiaire (24, 24').

9. Dispositif de soudage intermédiaire destiné à une utilisation pour souder ensemble deux extrémités d'une structure à tuyau en plastique coaxiale comportant un tuyau situé le plus à l'intérieur (22, 22') et un tuyau intermédiaire (24, 24') en une étape, ledit dispositif de soudage intermédiaire (1') comprenant :
- une section creuse (9) comportant une face intérieure (4) conçue pour recevoir le tuyau situé le plus à l'intérieur (22, 22') avec un ajustement serré et une face extérieure (2) ;
- un élément chauffant intérieur fermé circonférentiellement (6b) disposé de manière à chauffer la face intérieure (4) par conduction thermique ;
le dispositif de soudage intermédiaire comprenant en outre un élément chauffant extérieur fermé circonférentiellement (6a') disposé de manière à chauffer la face extérieure (2) par conduction thermique, laquelle face extérieure (2) est conçue pour glisser dans le tuyau intermédiaire (24, 24') avec un ajustement serré,
**caractérisé en ce que** l'élément chauffant extérieur fermé circonférentiellement (6a') et l'élément chauffant intérieur fermé circonférentiellement (6b') sont matérialisés sous la forme de couches soudables par induction intérieure et extérieure (14a, 14b),
la couche soudable par induction extérieure (14a) étant disposée décalée de la couche soudable par induction intérieure (14b) vue dans un sens perpendiculaire au sens longitudinal (L) du dispositif de soudage intermédiaire.

10. Dispositif de soudage intermédiaire selon la revendication 9, dans lequel les couches soudables par induction intérieure et extérieure (14a, 14b) comprennent une pluralité de suscepteurs.

11. Procédé permettant de souder axialement ensemble de pièces d'échange de chaleur à trous coaxiaux (20, 20') via le dispositif de soudage intermédiaire (1, 1') selon l'une quelconque des revendications 1 à 10, lesdites pièces d'échange de chaleur à trous coaxiaux (20, 20') comprenant chacune un tuyau situé le plus à l'intérieur (22, 22') et un tuyau intermédiaire (24, 24'), ce procédé comprenant les étapes suivantes :
- retrait (S01) des nervures axiales (24a) des tuyaux intermédiaires (24, 24') dans une zone terminale (28, 28') de chacune des pièces d'échange de chaleur à trous coaxiaux (20, 20') ;
- insertion (S02) du dispositif de soudage intermédiaire (1) dans un espace entre les tuyaux intermédiaires (24, 24') et les tuyaux situés le plus à l'intérieur (22, 22') ; et
- énergisation (S04) de l'élément chauffant extérieur fermé circonférentiellement et intérieur chauffé circonférentiellement (6a, 6a', 6b, 6b') via une source de courant.

12. Procédé selon la revendication 11 dépendante de la revendication 8, comprenant en outre l'étape suivante :
- connexion (S03) des deux bornes (13a, 13b) à une source de courant avant d'énergiser (S04) l'élément chauffant extérieur fermé circonférentiellement et intérieur chauffé circonférentiellement via la source de courant.

13. Procédé selon la revendication 11 ou 12, comprenant en outre les étapes suivantes :
- installation (S05) d'un dispositif de soudage extérieur (30) sur des tuyaux situés le plus à l'extérieur (26, 26') des pièces d'échange de chaleur à trous coaxiaux (20, 20') ; et
- énergisation (S06) d'un élément chauffant intérieur fermé circonférentiellement (34) du dispositif de soudage extérieur (30) via la source de courant.
